# EUROPÄISCHE PATENTSCHRIFT

(11) **EP 2 350 539 B1**
(45) Veröffentlichungstag und Bekanntmachung des Hinweises auf die Patenterteilung: **14.11.2012**
(21) Anmeldenummer: 10716461.8
(22) Anmeldetag: 09.03.2010
(51) Int. Cl.: F24J 2/54

(54) **NACHFÜHREINHEIT FÜR EINEN SONNENKOLLEKTOR**
TRACKING UNIT FOR A SOLAR COLLECTOR
UNITE DE POURSUITE POUR UN COLLECTEUR SOLAIRE

(30) Priorität: 12.03.2009 DE 102009012505; 25.09.2009 DE 102009045033
(43) Veröffentlichungstag der Anmeldung: 03.08.2011
(73) Patentinhaber: Georg-Simon-Ohm Hochschule für angewandte Wissenschaften Fachhochschule Nürnberg, 90489 Nürnberg (DE)
(72) Erfinder: POISEL, Hans, 91227 Leinburg (DE); SCHÜTZ, Sebastian, 90419 Nürnberg (DE); KILLERMANN, Michael, 90469 Nürnberg (DE); KIST, Alexander, 90552 Röthenbach (DE); HOFBECK, Klaus, 92318 Neumarkt (DE); SCHILLING, Harry, 91126 Schwabach (DE)
(74) Vertreter: Lohr, Georg
(86) Internationale Anmeldenummer: PCT/DE2010/075023
(87) Internationale Veröffentlichungsnummer: WO 2010/102619

(56) Entgegenhaltungen:
- WO-A1-2006/049560
- WO-A1-2007/109901
- WO-A1-2009/112026
- WO-A2-2008/115305
- DE-A1-102005 061 524
- DE-U1-202006 002 699
- JP-A- 11 125 765
- JP-A- 2009 044 022
- US-A- 4 408 595

## Beschreibung

### Technisches Gebiet

Die Erfindung betrifft eine Nachführeinheit für einen Sonnenkollektor, insbesondere zum Sammeln von Sonnenlicht, welcher in der aktuellen Position der Sonne nachgeführt werden kann. Dadurch lässt sich immer ein senkrechter Strahlungseinfall auf die Oberfläche des Kollektors und somit ein maximaler Wirkungsgrad des Kollektors erreichen.

### Stand der Technik

In der US 4,798,444 ist ein Sonnenkollektor offenbart, der die Sonnenstrahlung aus unterschiedlichen Richtungen aufnimmt und daher nicht nachgeführt werden muss.

In der US 5,581,447 ist ein Sonnenkollektor offenbart, welcher ein in zwei Achsen bewegliches Linsensystem aufweist, das Sonnenlicht in ein Lichtleiterbündel einkoppelt.

Ein weiteres in zwei Achsen bewegliches Linsensystem zur Einkopplung von Licht in Lichtleiterbündel offenbart die US 4,589,400. Hier wird auch ein Kollektorkopf mit Lichtsammelelementen, die flächig angeordnet sind, in zwei Achsen der Sonne nachgeführt.

Nachteilig an diesen Nachführsystemen ist, dass die ganze Kollektorfläche gedreht bzw. verkippt werden muss. Dies erfordert einen verhältnismäßig großen Aufbau und entsprechend viel Platz zur Bewegung des Kollektorkopfes. Weiterhin können aufgrund der großen Fläche, die durch die Bewegbarkeit auch im großen Abstand von der Montageebene angeordnet werden muss, hohe Windlasten auftreten.

In der WO 2007/109901 A1 ist eine Trägerstruktur für Sonnenkollektoren offenbart. Auf einer drehbaren Plattform befinden sich mehrere schwenkbare Träger, die in der Höhe gegeneinander gestaffelt angeordnet sind.

Die DE 10 2005 061 524 A1 offenbart eine Anlage zur Gewinnung von elektrischer Solarenergie. Hier sind ebenfalls auf einer drehbaren Plattform mehrere in der Höhe gestaffelt angeordnete Trägerelemente offenbart.

Die DE 20 2006 002 699 U1 offenbart ein Industrie- oder Gewerbebauwerk mit Solarkollektoren. Hier sind die Solarelemente schwenkbar auf einer drehbaren Plattform angeordnet.

### Darstellung der Erfindung

Der Erfindung liegt die Aufgabe zugrunde, eine Nachführeinheit für Sonnenkollektoren, insbesondere für Kollektoren, welche die Sonnenstrahlung in Lichtleiterbündel einkoppeln, zu gestalten, so dass diese weniger Platz benötigt, eine geringere Windlast aufweist und näher an der Montagefläche montiert werden kann. Weiterhin soll sie präziser auf die Sonne ausrichtbar sein. Diese Aufgabe wird durch eine Vorrichtung nach dem unabhängigen Patentanspruch gelöst. Vorteilhafte Ausgestaltungen der Erfindung sind in den Unteransprüchen angegeben.

Eine erfindungsgemäße Nachführeinheit für Sonnenkollektoren weist wenigstens zwei Paneele 20a, 20b, 20c, 20d, 20e auf, welche an einem Rahmen 10 angeordnet und jeweils um eine Längsachse verschwenkbar sind. Die Position der Drehachsen 21a, 21b, 21c, 21d, 21e ist bei den einzelnen Paneelen gegenüber den benachbarten Paneelen jeweils um ein vorgegebenes Maß Δx versetzt. Die Bewegung der einzelnen Paneele erfolgt durch eine Hebelmechanik oder einen Parallelantrieb, mit der die Paneele jeweils um den gleichen Winkel verschwenkt werden. Die Paneele haben vorzugsweise eine rechteckige, längliche Form, wobei die Längsachse vorzugsweise parallel zur längeren Kante des Rechtecks verläuft.

Durch eine solche erfindungsgemäße Anordnung wird die Gesamtfläche des Sonnenkollektors auf mehrere Teilflächen, entsprechend der Anzahl der Paneele, aufgeteilt. So muss nicht mehr die gesamte Fläche zur Anpassung an den Son-nenstand nachgeführt werden. Vielmehr müssen nur noch einzelne Teilflächen bewegt werden. Dadurch kann die ganze Anordnung wesentlich näher an der Montageoberfläche, wie einem Dach oder einer Wand, montiert werden. Entsprechend ist die ganze Anordnung weniger auffällig, stört das Erscheinungsbild des Gebäudes oder sonstigen Objektes weniger und verursacht auch eine geringere Windlast. Eine solche Anordnung, die relativ flach ist, kann nun problemlos in hohen Stückzahlen an Gebäuden, Gebäudedächern oder Fassaden, oftmals ohne zusätzliche Baugenehmigung, montiert werden.

Um eine Nachführung in der zweiten Achse zu ermöglichen, ist der Rahmen 10 zusammen mit den Paneelen drehbar gelagert. Damit ist die Anordnung auch weitgehend unabhängig von einem Montagewinkel, bezogen auf den Untergrund.

Um den Rahmen auf einfache Weise drehbar zu machen, wird er vorteilhafterweise auf einem Führungsring befestigt. Dieser Führungsring weist eine erste Lauffläche parallel zum Rahmen bzw. zur Paneelanordnung auf. Weiterhin ist eine Innenlauffläche vorgesehen, welche unter einem Winkel kleiner 90° zur ersten Lauffläche angeordnet ist. Durch diese schräge Anordnung kann über diese Innenlauffläche auch eine (kleinere) senkrecht zur ersten Lauffläche wirkende Kraft sowie eine im rechten Winkel hierzu auftretende Kraft aufnehmen. Damit kann der Rahmen mit den Paneelen fest auf den Führungsring gespannt werden.

Ergibt sich ein Winkel der Fehlstellung 51 zwischen dieser Hauptrichtung 32 der Linse bzw. des Lichtsammlers 30 und den Sonnenstrahlen 50, so muss dieser zur Aufrechterhaltung des optimalen Wirkungsgrads korrigiert werden. Eine exakte Positionierung der einzelnen Linsen in Richtung der Sonne erfordert einen hohen technischen Aufwand und insbesondere niedrige Toleranzen in der Mechanik der einzelnen Paneele sowie deren Aufhängung. Um den Aufwand möglichst gering zu halten, ist entsprechend einer weiteren Ausgestaltung der Erfindung eine passive Feinjustierung der Lage der Linsen vorgesehen. Hierzu wird Strahlung von der Sonne aufgefangen und erwärmt sich unter Strahlung ausdehnendes Material. Entsprechend der Strahlung ändert sich die Ausdehnung des Materials und bewirkt eine Positionsänderung der Linsen. Dadurch wird immer die optimale Position der Linse in Bezug auf die Sonne erreicht.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Fig. 1: zeigt eine erfindungsgemäße Vorrichtung
- Fig. 2: zeigt die Vorrichtung in seitlicher Ansicht mit senkrecht stehenden Paneelen
- Fig. 3: zeigt die Anordnung mit nach links schräg verschwenkten Paneelen
- Fig. 4: zeigt die Anordnung mit stark verschwenkten Paneelen
- Fig. 5: zeigt schematisch die Positions- und Winkelverhältnisse einer erfindungsgemäßen Anordnung
- Fig. 6: zeigt die Positions- und Winkelverhältnisse bei einer Verschwenkung nach links
- Fig. 7: zeigt die Positions- und Winkelverhältnisse bei einer Verschwenkung nach rechts
- Fig. 8: zeigt die Positions- und Winkelverhältnisse bei einer Anordnung ohne Achsenversatz
- Fig. 9: zeigt einen Schnitt durch den Führungsring einschließlich der darauf laufenden Führungsrollen
- Fig. 10: zeigt ist eine Vorrichtung zur wärmegesteuerten Nachführung der Linsen.
- Fig. 11: zeigt ist eine Vorrichtung zur wärmegesteuerten Nachführung der Linsen im ausgeglichen Zustand.
- Fig. 12: zeigt ist eine Vorrichtung zur wärmegesteuerten Nachführung der Linsen im Detail.

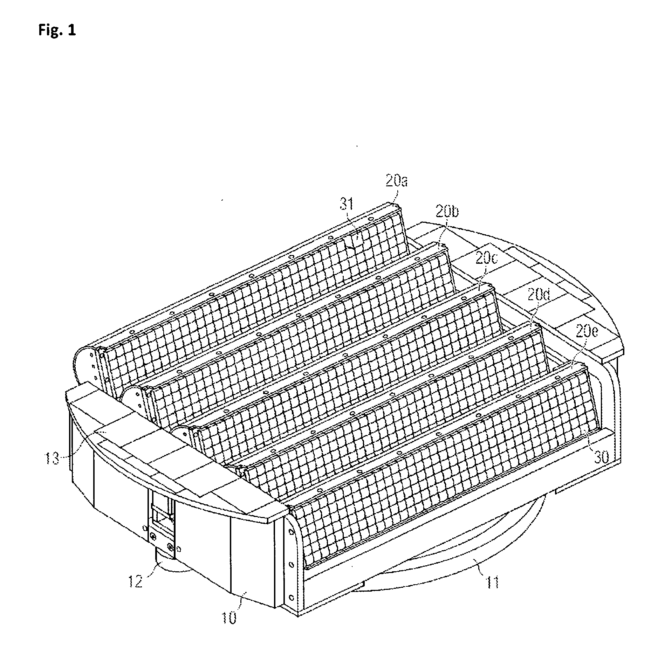

In Fig. 1 ist eine erfindungsgemäße Vorrichtung dargestellt. Der Sonnenkollektor umfasst einzelne Paneele 20a, 20b, 20c, 20d, 20e. Diese Paneele sind in einem Rahmen 10 schwenkbar gelagert. Der Rahmen selbst ist auf dem Führungsring 11 drehbar gelagert und kann mittels eines Antriebs 12 gedreht werden. Der Führungsring 11 ist fest auf einer Montagefläche, wie beispielsweise einem Hausdach, einem Flachdach oder einer Wand montiert. Die einzelnen Paneele 20a bis 20e umfassen eine Vielzahl von Linsen bzw. Lichtsammlern 30 zur Bündelung von Sonnenstrahlung in einzelne lichtleitende Fasern. Ein optionaler Sonnensensor 31 ist fest auf der Oberfläche eines Paneels montiert und wird zusammen mit diesem bewegt. Er dient zur exakten Erkennung der Sonnenposition und damit zur exakten Nachführung der Paneele. Zur Gewinnung elektrischer Energie, beispielsweise für den Nachführantrieb können optional noch Solarzellen 13 vorgesehen sein.

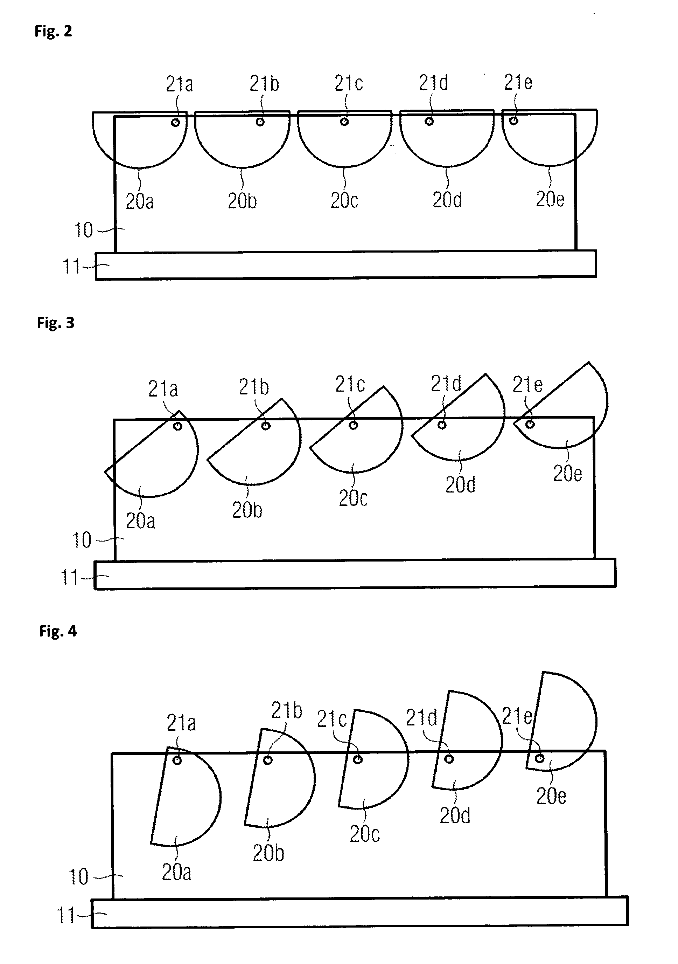

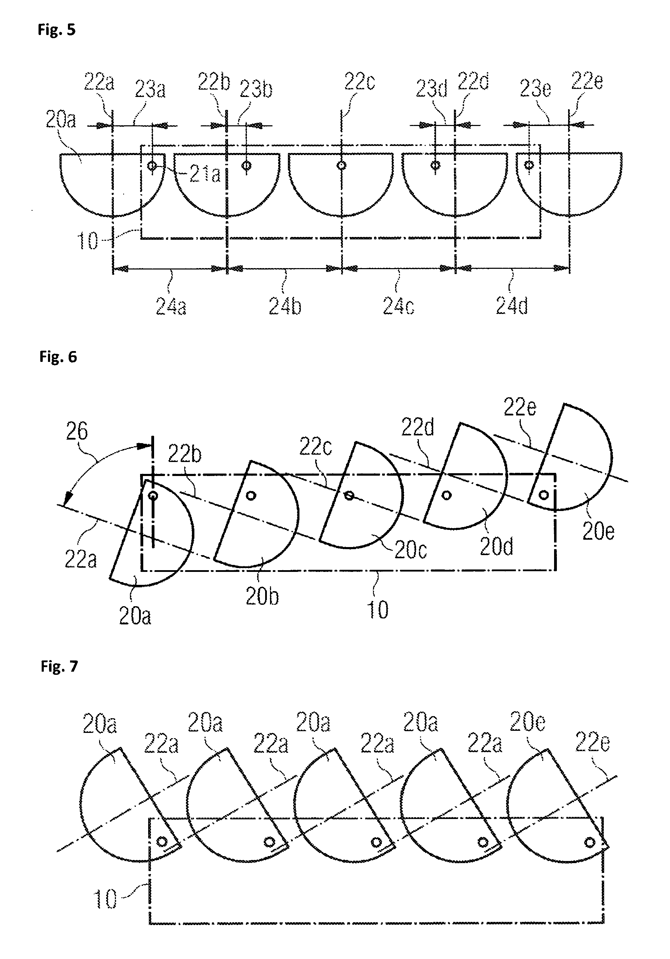

In Fig. 2 ist stark schematisiert eine seitliche Ansicht der erfindungsgemäßen Anordnung dargestellt. Hier sind wieder die einzelnen Paneele 20a bis 20e seitlich zu erkennen. Diese sind über Drehachsen 21a bis 21e schwenkbar gelagert. Wie hier gut zu erkennen ist, sind die Drehachsen an unterschiedlichen Positionen relativ zu den einzelnen Paneelen angeordnet. Die exakte Anordnung wird später in den Figuren 5 bis 8 dargestellt.

Fig. 3 zeigt eine entsprechende Anordnung aus Fig. 2, wobei die Paneele um einen geringen Winkel nach links verschwenkt sind. Es ist hier gut zu erkennen, dass durch die unterschiedlich angeordneten Drehachsen nun eine Höhenverschiebung der einzelnen Paneele auftritt.

In Fig. 4 ist eine Drehung der Paneele um ca. 90° gegenüber der Waagrechten dargestellt. Hier ergibt sich auch der maximale Höhenversatz gegenüber der Waagerechten. Es ist offensichtlich, dass durch diesen Höhenversatz die gegenseitige Abschattung der einzelnen Paneele geringer ausfällt. Dadurch kann also mehr Licht aufgefangen werden.

Fig. 5 zeigt Größen- und Winkelverhältnisse bei einer erfindungsgemäßen Anordnung. Die einzelnen Paneele 20a bis 20e sind über die Drehachsen 21a bis 21e gelagert. Die Mittelachsen der Paneele 22a bis 22e zeigen in der waagrechten Anordnung der Paneele senkrecht nach oben. Die Abstände 24a bis 24d der Mittelachsen der einzelnen Paneele sind bevorzugt gleich groß und durch die Größe bzw. Breite der Paneele vorgegeben. Diese Mittelabstände entsprechen dem Abstand der einzelnen Paneele abzüglich des Maßes Δx. Im hier gezeigten Ausführungsbeispiel verläuft nur bei dem mittleren Paneel 20c die Mittelachse 22c durch die Drehachse 21c. Bei dem Paneel 20d verläuft die Mittelachse 22d in einem Abstand 23d entsprechend Δx von der Drehachse 21d. Dieser Abstand 23e entspricht 2 * Δx bei dem Paneel 20e. Entsprechendes gilt für die Paneele 20b und 20a, wobei auch hier die Abstände zwischen den Mittelachsen und den Drehachsen Δx (bei 20b) bzw. 2 * Δx (bei 20a) betragen.

Im allgemeinen Fall unterscheiden sich die Abstände zwischen Mittelachse und Drehachse benachbarter Paneele um Δx.

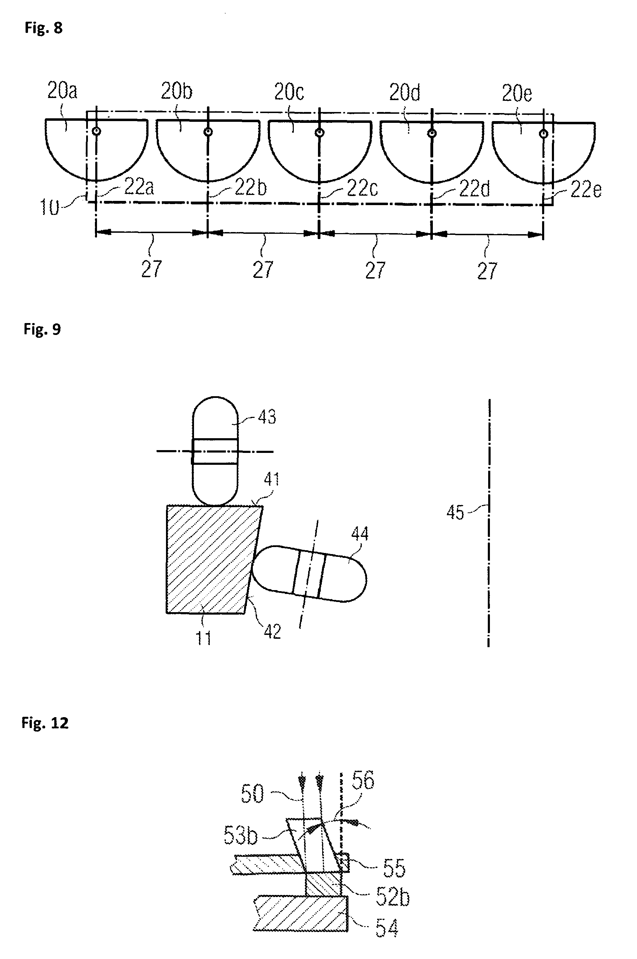

Dadurch, dass die Drehachsen bei den äußeren Paneelen 20a und 20e an den innen gelegenen Seiten angreifen, kann der gesamte Rahmen 10 bei der erfindungsgemäßen Ausführung kleiner gestaltet werden als bei einer Ausführung, bei der die Mittelachsen durch die Drehachsen verlaufen, wie in der Fig. 8 dargestellt. Zudem schwenken die Paneele nach innen in Richtung des Rahmens 10, so dass auch der Abstand zu benachbarten Anordnungen kleiner gehalten werden kann.

Fig. 6 zeigt die vorherige Anordnung mit um einen Winkel 26 verschwenkten Paneel. Hierbei sind die Mittelachsen 22a bis 22e der einzelnen Paneele gegenüber der Waagrechten um den Winkel 26 verkippt.

Fig. 7 zeigt eine Anordnung entsprechend der vorhergehenden Figur, wobei die einzelnen Paneele jedoch in die entgegengesetzte Richtung verschwenkt sind.

In Fig. 8 ist eine Anordnung dargestellt, bei der die Mittelachsen durch die Drehachsen verlaufen. Dadurch ergeben sich konstante Abstände 27 der einzelnen Drehachsen. Diese Abstände zwischen den Drehachsen sind größer als die Abstände zwischen den Drehachsen in einer Anordnung nach Fig. 5. Dadurch muss auch der Rahmen 10 größer ausgeführt sein.

In Fig. 9 ist noch ein Schnitt durch den Führungsring 11 dargestellt. Hierbei ist die erste Lauffläche 41 zu erkennen, auf der eine erste Rolle läuft. Eine zweite Innenlauffläche 42, welche mit der ersten Lauffläche 41 einen Winkel kleiner 90° einschließt, dient als Lauffläche für eine Innenrolle 44. Die beiden Rollen bilden einen Rollensatz und laufen um die Rotationsachse der gesamten Anordnung 45.

Die Rollen sind drehbar um ihre strichpunktiert dargestellten Mittelachsen mit dem Rahmen 10 (hier nicht dargestellt) verbunden. Wenigstens 3 derartige Rollensätze aus jeweils einer ersten Rolle und einer zweiten Rolle tragen der Rahmen 10 auf dem Führungsring 11. Dadurch dass die beiden Laufflächen 41 und 42 einen Winkel kleiner 90° einschließen, kann die Innenrolle 44 eine geringe Kraftkomponente senkrecht in Richtung auf die erste Rolle 43 ausüben. Es kann hier eine Vorspannung der beiden Rollen gegeneinander eingestellt werden. Damit kann die gesamte Anordnung nicht nach oben aus dem Führungsring herausrutschen. Somit kann eine entsprechende Anordnung auch an schrägen oder senkrechten Wandflächen montiert werden. Bei einer senkrechten Wandfläche wäre dann die hier erste Lauffläche 41 parallel zur senkrechten Wandfläche und würde ebenfalls senkrecht stehen.

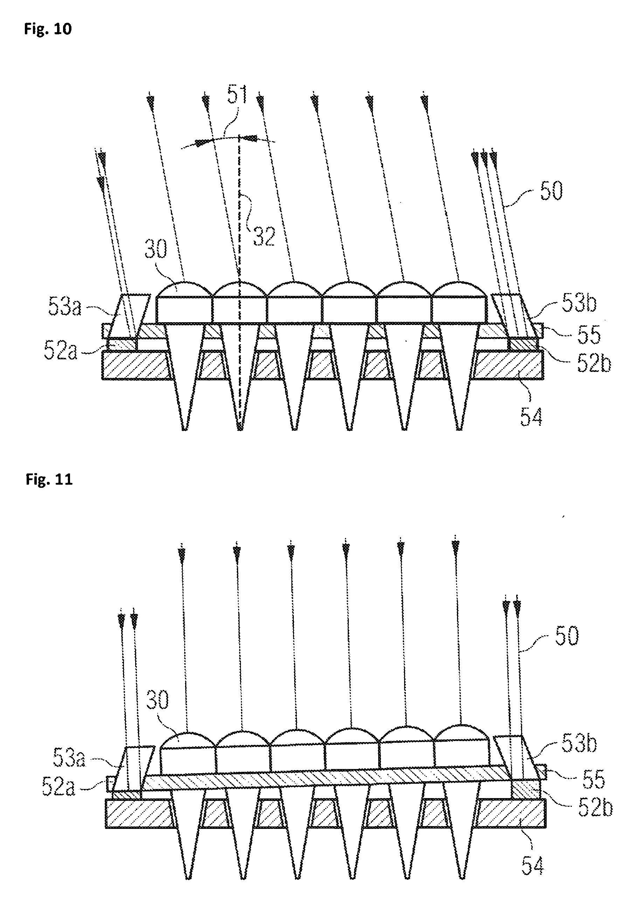

In Fig. 10 ist eine Vorrichtung zur wärmegesteuerten Nachführung der Linsen bzw. Lichtsammler 30 dargestellt. Die Sonnenstrahlen 50 können nur dann mit optimalem Wirkungsgrad in die Lichtsammler 30 eingekoppelt werden, wenn die Sonnenstrahlen 50 parallel zur Hauptrichtung der Linse 32 einfallen. Zur passiven Minimierung des Winkels 51 der Fehlstellung wird Sonnenlicht 50 über Strahlungsbegrenzungen 53a, 53b auf sich unter Wärme ausdehnendes Material 52a, 52b geführt. Entsprechend der von diesem Material absorbierten Wärme dehnt sich dieses Material aus und verändert, wie in der Zeichnung dargestellt, seine Dicke, so dass die Nachführplatte 55, welche die einzelnen Linsen 30 trägt, gegenüber der Grundplatte 54 verkippt wird. In dem hier dargestellten Beispiel der Fehlstellung trifft auf das sich unter Wärme ausdehnende Material 52b mehr Licht als auf das sich unter Wärme ausdehnende Material 52a. Entsprechend wird sich das Material 52b mehr ausdehnen.

Fig. 11 zeigt das Ausführungsbeispiel aus der Fig. 10 mit einem korrigierten Winkel 51 der Fehlstellung. Hier hat sich das sich unter Wärme ausdehnende Material 52b aufgrund der höheren Sonneneinstrahlung ausgedehnt, während das sich unter Wärme ausdehnende Material 52a aufgrund der niedrigeren Sonneneinstrahlung geschrumpft ist. Entsprechend ist nun die Nachführplatte 55 gegenüber der Grundplatte 54 verkippt, so dass die Linsen 30 optimal auf die Sonne ausgerichtet sind. Nun trifft auch aufgrund der Strahlungsbegrenzungen 53a, 53b auf die beiden sich unter Wärme ausdehnenden Materialien 52a, 52b gleich viel Strahlung, so dass diese sich nicht weiter verändern.

In Fig. 12 ist noch die Anordnung zur Nachführung der Linsenposition im Detail dargestellt. Die Strahlungsbegrenzung 53b ist um einen Winkel 56 gegenüber der Senkrechten auf die Nachführplatte 55 verkippt. Durch diesen Winkel und eine zusätzliche Abschrägung kann die Empfindlichkeit der Nachführung eingestellt werden. In Fig. 10 ist eine Vorrichtung zur wärmegesteuerten Nachführung der Linsen 30 dargestellt.

### Bezugszeichenliste

- 10: Rahmen
- 11: Führungsring
- 12: Antrieb
- 13: Solarzellen
- 20a-e: Paneel
- 21a-e: Drehachsen
- 22a-e: Mittelachse Paneel
- 23a-e: Abstand Drehpunkt-Mittelachse
- 24a-d: Abstand der Mittelachsen
- 25a-e: Senkrechte der Paneele
- 26: Kippwinkel
- 27: Abstand der Mittelachsen
- 30: Linse bzw. Lichtsammler
- 31: Sonnensensor
- 32: Hauptrichtung der Linse
- 41: erste Lauffläche
- 42: Innenlauffläche
- 43: erste Rolle
- 44: Innenrolle
- 45: Rotationsachse
- 50: Sonnenstrahl
- 51: Winkel der Fehlstellung
- 52a,b: Unter Wärme ausdehnendes Material
- 53a,b: Strahlungsbegrenzung
- 54: Grundplatte
- 55: Nachführplatte
- 56: Verkippungswinkel der Strahlungsbegrenzung

## Patentansprüche

1. Nachführeinheit für einen Sonnenkollektor umfassend wenigstens einen Träger (10) mit wenigstens zwei Paneelen (20a, 20b, 20c, 20d, 20e), welche um jeweils eine Drehachse (21a, 21b, 21c, 21d, 21e) verschwenkbar sind, wobei sich der Abstand der Drehachse eines jeden Paneels von dessen Mittelachse (22a, 22b, 22c, 22d, 22e) zwischen benachbarten Paneelen jeweils um ein Maß Δx unterscheidet.

2. Nachführeinheit nach Anspruch 1,
**dadurch gekennzeichnet, dass**
die Drehachsen der Paneele an dem Träger (10) in einer Ebene angeordnet sind.

3. Nachführeinheit nach Anspruch 1,
**dadurch gekennzeichnet, dass**
mehrere Paneele zusammen durch eine Mechanik um den gleichen Winkel verschwenkbar sind.

4. Nachführeinheit nach einem der vorhergehenden Ansprüche,
**dadurch gekennzeichnet, dass**
der Träger (10) drehbar auf einem fest an einer Montagefläche montiertem Führungsring (11) gelagert ist.

5. Nachführeinheit nach Anspruch 4,
**dadurch gekennzeichnet, dass**
der Führungsring (11) eine erste Lauffläche (41) und eine hierzu unter einem Winkel kleiner 90 Grad angeordnete Innenlauffläche (42) aufweist.

6. Nachführeinheit nach Anspruch 5
**dadurch gekennzeichnet, dass**
auf der ersten Lauffläche (41) eine erste Rolle (43) und auf der Innenlauffläche (42) eine Innenrolle (44) laufen, welche gegeneinander verspannt sind.

7. Nachführeinheit nach einem der vorhergehenden Ansprüche,
**dadurch gekennzeichnet, dass**
zur passiven Feinausrichtung von auf wenigstens einem auf einem Paneel (20a, 20b, 20c, 20d, 20e) angeordneten Lichtsammler (30) eine Vorrichtung vorgesehen ist, die die Ausrichtung des wenigstens einen Lichtsammlers (30) auf die Sonne durch thermische Ausdehnung von sich unter Wärme ausdehnendem Material korrigiert.

## Claims

1. Tracking unit for a solar collector comprising at least one frame (10) with at least two panels (20a, 20b, 20c, 20d, 20e) which can each be pivoted about a pivoting axis (21a, 21b, 21c, 21d, 21d), with the positions of the center axes (22a, 22b, 22c, 22d, 22e) of adjacent panels being displaced by a distance Δx.

2. Tracking unit according to claim 1, **characterized in that** the pivoting axes of the panels are arranged on the frame (10) in one plane.

3. Tracking unit according to claim 1, **characterized in that** a plurality of panels can be pivoted at the same angle by means of a mechanical drive.

4. Tracking unit according to one of claims 1 to 3, **characterized in that** the frame (10) is mounted rotatably on a guide ring (11) mounted rigidly on a mounting surface.

5. Tracking unit according to claim 4, **characterized in that** the guide ring (11) is provided with a first bearing surface (41) and an internal bearing surface (42) which is arranged at an angle of less than 90° with respect to the first bearing surface.

6. Tracking unit according to claim 5, **characterized in that** a first roller(43) runs on the first bearing surface (41) and an internal roller (44) runs on the internal bearing surface (42), which are braced against each other.

7. Tracking unit according to one of claims 1 to 6, **characterized in that** for passive fine adjustment of at least one light collector (30) arranged on one panel (20a, 20b, 20c, 20d, 20e) a device is provided, which corrects the alignment of at least one light collector (30) to the sun by means of thermal expansion of a material that expands in response to heat.

## Revendications

1. Unité de poursuite pour un collecteur solaire comprenant au moins un support (10) avec au moins deux panneaux (20a, 20b, 20c, 20d, 20e) qui peuvent pivoter chacun autour d'un axe de rotation (21a, 21b, 21c, 21d, 21e), la distance entre l'axe de rotation de chaque panneau et l'axe médian (22a, 22h, 22c, 22d, 22e) de celui-ci étant différente d'une dimension Δx entre des panneaux voisins.

2. Unité de poursuite selon la revendication 1, **caractérisée en ce que** les axes de rotation des panneaux sont disposés dans un plan sur le support (10).

3. Unité de poursuite selon la revendication 1, **caractérisée en ce que** plusieurs panneaux peuvent être inclinés selon le même angle par un mécanisme.

4. Unité de poursuite selon l'une des revendications précédentes, **caractérisée en ce que** le support (10) est monté avec possibilité de rotation sur un anneau de guidage (11) monté fixe sur une surface de montage.

5. Unité de poursuite selon la revendication 4, **caractérisée en ce que** l'anneau de guidage (11) présente une première surface de roulement (41) et une surface de roulement intérieure (42) disposée par rapport à celle-ci à un angle inférieur à 90°.

6. Unité de poursuite selon la revendication 5, **caractérisée en ce qu'**un premier galet (43) roule sur la première surface de roulement (41) et un galet intérieur (44) sur la surface de roulement intérieure (42), les galets étant contraints l'un vers l'autre.

7. Unité de poursuite selon l'une des revendications précédentes, **caractérisée en ce qu'**en vue de l'orientation fine passive d'au moins un photocollecteur (30) disposé sur un panneau (20a, 20b, 20c, 20d, 20e), il est prévu un dispositif qui corrige l'orientation de l'au moins un photocollecteur (30) vers le soleil par dilatation thermique de matériau dilatable sous l'action de la chaleur.
